# EUROPEAN PATENT SPECIFICATION

(11) **EP 0 422 713 B1**
(45) Date of publication and mention of the grant of the patent: **09.11.1994**
(21) Application number: 90202571.7
(22) Date of filing: 28.09.1990
(51) Int. Cl.: A23D 7/00

(54) **Edible spread**
Essbarer Aufstrich
Matière à tartiner comestible

(30) Priority: 09.10.1989 GB 8922718; 01.03.1990 GB 9004615; 04.05.1990 GB 9010131
(43) Date of publication of application: 17.04.1991
(73) Proprietor: UNILEVER N.V., 3013 AL Rotterdam (NL); UNILEVER PLC, London EC4P 4BQ (GB)
(72) Inventor: Havenstein, Alfred Gustav, D-2000 Schenefeld (DE); Huffziger, Axel, D-2000 Hamburg 62 (DE)
(74) Representative: Keppels, Willem Richard Engelbertus Gerardus, Drs.

(56) References cited:
- EP-A- 0 151 450
- EP-A- 0 157 954
- EP-A- 0 203 628
- EP-A- 0 253 429
- EP-A- 0 279 498
- EP-A- 0 279 499
- EP-A- 0 297 690
- EP-A- 0 304 131
- GB-A- 1 113 241
- US-A- 3 457 086
- US-A- 4 425 370
- WPIL, FILE SUPPLIER, AN=84-144091 [23], Derwent Publications Ltd, London, GB;& RD-A-241 052 (GRINDSTED PROD. A/S) 10-05-1984

## Description

The present invention falls in the technical field of edible spreads and relates to an edible spread with improved properties.

Edible fats are emulsified with water-phases to form edible spreads. While fat and water are the principal components of edible spreads other components (such as emulsifiers, thickeners, preservatives and anti-spattering agents), as are mentioned below, are included in product formulations to manipulate product properties.

Spreads are characterised by a wide range of physical product properties and organoleptic properties. Some of these properties are more important than others in consumer acceptance. In particular, good spreadability, keepability at ambient temperature, consistency both at storage and room temperature, mouth meltdown and oil-retention are important properties.

Keepability is known to be influenced by the water droplet distribution and water phase contents. Coarse emulsions containing bacterial and mould nutrients, such as proteins, generally have poor keepability. Fine emulsions are resistant to bacterial spoilage but are still succeptable to mould growth. Water phase distribution is influenced by processing conditions. Keepabilty can be improved markedly by cold-distribution and cold-storage, but this is not always practical. Keepabilty can also be improved by reducing the nutrient content or incorporating microbial growth inhibitors (such as salts and/or acids) in the product. However, reduction of protein content generally results in poor organoleptic properties and can influence processability of the emulsion. The use of preservatives, particularly substances such as potassium sorbate is commonplace, but is not acceptable to some groups of consumers. While is therefore known that both product composition and process conditions can influence the water-phase distribution, limited success has been enjoyed in the search for a combination of process conditions and product components which enable the manufacture of acceptable products of high physical and microbiological stability but with a very simple formulation.

EP-A-279,498 describes a 10-35wt% continuous fat spread having a maximum number weighted mean diameter droplet size of 5µm in which appreciable amounts of sorbate and lactic acid are used as preservative and acidulent respectively.

RD-241,052 of 20-4-84 teaches using citric acid esters of monoglycerides and lecithin as anti-spattering agents.

Fat blends having a SFI of N₁₀ = 25-55, N₂₀ = 10-25, N₃₀ = 0-6 and N₃₅ = 0-2.5 have been described in EP-A-151,450 for use in margarines containing soured milk in the aqueous phase and prescribing 0.1% monodiglycerides as emulsifier. No indications or suggestions about droplet sizes or preservatives are given.

US-A-3,457,086 discloses 35-45% fat spreads devoid of proteins. In all recipes a usual amount of sorbate is used as a preservative.

Our invention provides reduced fat spread products which do not contain preservatives and which have acceptable organoleptic properties.

According to a one aspect of the present invention there is provided an edible emulsion comprising a dispersion of 15-60%wt of a water phase in 40-85%wt of a continuous fat phase CHARACTERISED IN THAT the water phase contains less than 0.05% protein and has a D3,3 (volume weighted geometric mean diameter) ≦ 2µm and a sigma value (standard deviation of the mean value) ≦ 2.5 for the water drop size.

While the fat content of emulsions according to the present invention may range from 40% (halvarines) to 85% (margarines), particularly good results are obtained when products are prepared with 50-70% fat. These "reduced fat spreads" are multi-functional in that they may be used in cooking for shallow frying and as spreads. The most preferred fat level for reduced fat spreads is around 60% fat.

Typically, the product water-phase further comprises a non-proteinaceous emulsifier system. Suitable known emulsifiers are lecithin, monoglycerides and mixtures of one or more lecithins and one or more monoglycerides. The combination of both lecithins and monoglycerides results in stable products with a good, creamy consistency. The presence of these emulsifiers in the products of the present invention reduces oil exudation and improves so-called "second place keep-ability", at temperatures up to 25°C. Preferably, the emulsifier system is present at concentrations of 0.1-0.5%.

As mentioned below, spreads according to the present invention are stable in the absence of an emulsifier system. Thus, the emulsifier component is optional.

Products can contain salt, at a concentration of up to 2%. Salt is present for organoleptic reasons rather than as a preservative. In preferred embodiments the salt content is below 0.2%.

It is commonplace in edible spreads production to use lactic or citric acids to establish the desired pH. The quantities of these ingredients required is to some extent determined by the protein content, as the presence of protein buffers the pH and demands the addition of either stronger acids or larger amounts of weak acids. Sorbic acid (as potassium sorbate) is commonly used as a preservative in edible spreads.

We have determined that in the absence of protein and other strong buffering agents such as sorbate, the waterphase pH can be established by the presence of low levels of ascorbate ions (vitamin C). With this composition pH values of 4.2-7.0 are accessible. Preferred pH values are in the range 4.6-5.2. Other vitamins (particularly A and E) may be added as is conventional in margarine and other spread production.

Accordingly a further aspect of the present invention provides an edible spread which is substantially free of protein and which contains 0.0001-0.1% ascorbic acid.

Preferably, the edible spreads according to the present invention have a rather simple formulation and comprise vegetable fat, water, at least one non-proteinaceous emulsifier (preferably lecithin), ascorbic acid, vitamin A and vitamin E. It is observed that these particular formulations are free of both sorbic and lactic acids.

The fat phase N-line should preferably be as given in the following table, in which the first column gives a broad acceptable range and the second column a particularly preferred range.

| | | |
|---|---|---|
| N10 | 25-40 | 29-31 |
| N15 | 22-30 | 22-24 |
| N20 | 14-21 | 14-16 |
| N25 | 8-12 | 8-10 |
| N30 | <6 | 2-4 |
| N35 | <2 | close to 0 |

Within the constraints of these physical properties considerable variation of fat phase composition is possible. Such variations enable both the production of both products suitable for packing in tubs or products suitable for packing in a wrapper. The use of vegetable fats is preferred due to their low content of saturated fatty acids, however the use of animal fats, such as butterfat and tallow is envisaged. In particular embodiments of the present invention, the fat phase comprises at least one liquid oil and at least one interesterified blend of palm and vegetable oils. It is also envisaged that simple non-hydrogenated and/or single component fat phases such as "high stearic" vegetable oils may be employed.

It is preferred that the vegetable fat employed should have a low level of trans fatty acids. This can be ensured by suitable selection of the fat phase.

The use of fat-replacers instead of a portion of the fat blend is not excluded. It is envisaged that the so-called sucrose fatty acid esters may replace some or all of the tri-glyceride fat phase of the spreads according to the present invention.

Quite surprisingly, we have determined that the products of the present invention may be manufactured without added emulsifiers while retaining many of the spreading and second place keepability benefits of the invention. This further reduces the number of ingredients which must be included in the product.

Accordingly a further aspect of the present invention provides an edible emulsion spread as defined in claim 1 which would be stable even in the absence of emulsifier.

Typically lecithin may be incorporated into the formulation as an anti-spattering agent. Accordingly the invention also relates to a spread as defined before comprising lecithin as an anti-spattering agent.

In the most preferred embodiments of the present invention, spreads have a rather simple basic formulation which comprises a vegetable fat (preferably a low or zero trans vegetable fat), water, and at least one non-proteinaceous anti-spattering agent (preferably lecithin). Other minor components such as salt and colour will generally be present. It is observed that these particular formulations are free of both emulsifier (as such) and preservative.

In order that the present invention may be further understood, it will be elaborated upon hereafter by means of example and with reference to the accompanying figures, wherein:
Figure 1: shows in schematic form, a spread production line for the production of spreads according to the present invention (fig 1B) and a spread production line for the production of spreads according to the prior art (fig 1A).
Figure 2: shows a graph illustrating the effect of variation of homogeniser (5) conditions on drop size in the product.
Figure 3: shows a graph illustrating the effect of variation of the outlet temperature of the A-unit (9) on drop size in the product.

### EXAMPLES:

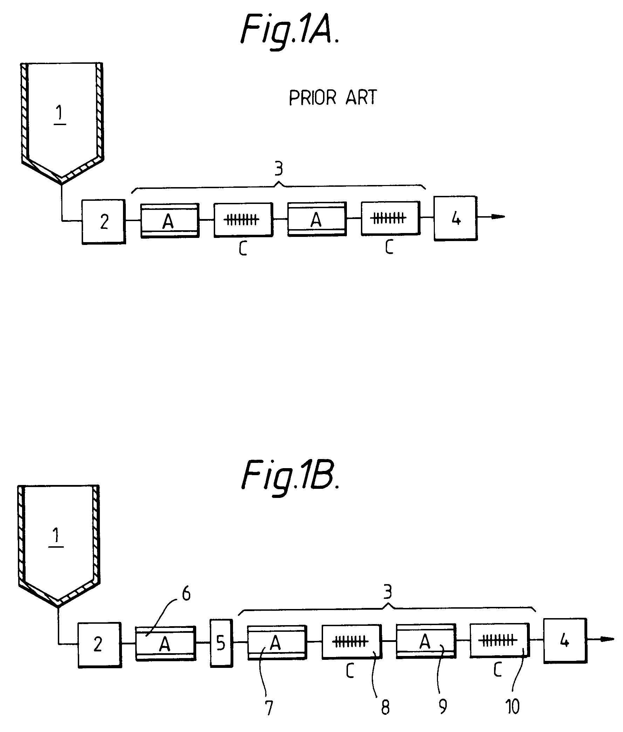

For comparative purposes figure 1A illustrates the method and apparatus of the present invention in schematic form as compared with a method of the prior art. Service circuits have been omitted from the diagram for the sake of clarity.

In the method of the prior art (figure 1a) a premix is prepared in tank (1), Pasteurised in a heating unit (2) and fed into VOTATOR® line (3). A conventional VOTATOR® line consists of A units and C-units, and it is not uncommon for these to be arranged in an ACAC sequence. In this method of the prior art it is believed that inversion of the oil-in-water premix to the water-in-oil product occurs in the first C unit. Product emerges from the end of the line into packing machine (4).

### Example 1: The General Process:

Turning to figure 1B it can be seen that the apparatus according to the present invention is similar to that given in the comparative figure 1A. The same reference numerals have been used throughout. However a further VOTATOR® A-unit (6) and a homogenizer (5) have been inserted into the process line.

In order to make a product according to the present invention premix was made up with the following formulation and processed according to the method given below. Here, as throughout the specification, all percentages are expressed in terms of weight.

| | | |
|---|---|---|
| Fat Blend | 59.55% | |
| Hymono 8803® | 00.15% | (emulsifier) |
| Hymono 7804® | 00.10% | (emulsifier) |
| Bolec CM® | 00.20% | (emulsifier) |
| NaCl | 00.15% | |
| β-Carotene | 15ppm | (colour) |
| H&R 53967® | 670ppm | (flavour) |
| Water | 39.86% | |

The premix was prepared by mixing together all the ingredients in a thermostatted tank (1) at 58-61°C. The premix was drawn from the tank with a booster pump (not shown) at a rate of 106 kg/hr and fed into an Votator (RTM) A-unit (6) with an process stream exit temperature of 16°C, and a service stream (liquid ammonia coolant) temperature of -20°C. From the A-unit, the product was fed into an APV Gaulin 300® series two-stage homogeniser (5) equipped with a high pressure pump. The pressure drop in the homogeniser was 35 Bar over each of the two stages, and the output temperature of the process stream was 26.5-29.5°C.

Variations in product properties obtained by variations of the homogenizer (5) temperature are elaborated upon in example 2 below.

From the homogeniser (5), the product was fed into an ACAC sequence (3) of cooling and working units. The first A-unit (7) was supplied with liquid ammonia coolant at -6°C and cooled the process stream to 16-19°C. The first C-unit (8) could be operated at a rotational speed of between 150-800 rpm without difficultly and a product emerged at a temperature of 20-25°C; the degree of heating being determined by the extent of working. The second A-unit (9) was supplied with liquid ammonia coolant at a temperature of -20°C and cooled the process stream to a temperature of 14.5°C.

Variations in product properties obtained by variation of the exit temperature of the second A-unit (9) are elaborated upon in example 3 below.

The second C-unit (10) operated at 150 rpm and product emerged from this unit, for packing, at a temperature of 17.5°C. The packing operation was performed on a low shear packing machine (4) so as to avoid over-working the product.

Product properties were measured for a range of samples, manufactured according to the method of the present invention. Typical values are as follows:

| | | |
|---|---|---|
| Stevens values | 5°C | 360-293 |
| | 10°C | 315-217 |
| | 15°C | 107-78 |
| | 20°C | 37-44 |
| | 23°C | 20-13 |
| | 25°C | 13-15 |

The products showed acceptable spreading behaviour and excellent second place keepability.

### Comparative Example 1

In order to compare the effects of homogenisation with non-homogenised products a composition as used in example 1 was processed through a "Votator"® sequence of AACAAC to product a spread having as near as possible the same physical characteristics of the spread of example 1. The following results were obtained:

| | Example 1 | | Comparison | |
|---|---|---|---|---|
| Stevens values | | | | |
| | (wk1) | (wk4) | (wk1) | (wk4) |
| 5°C | 288 | 432 | 331 | 332 |
| 10°C | 170 | 225 | 202 | 179 |
| 15°C | 91 | 145 | 127 | 76 |
| 20°C | 45 | 54 | 49 | 26 |
| 25°C | 20 | 20 | 22 | 12 |
| D 3,3 | 1.0 | 1.9 | 2.5 | 2.6 |

| Other properties: | | | | |
|---|---|---|---|---|
| taste | 6.9 | 6.9 | 6.9 | 7.0 |
| spreading | 1.5 | 1.5 | 2.0 | 2.0 |

It can be seen from these figures that there is no significant difference in the products of the present invention and those of the prior art as regards the Stevens values and their variation with time during storage under constant conditions. The taste of the products of the present invention is slightly better on this 1-10 scale.

Turning to second-place keepability, the following results were obtained for a spread prepared according to example 1 as compared with a spread prepared from an identical composition according to a method of the prior art. The examples were repeated with both wrapper margarine fat blends (W) and tub margarine fat blends (T).

| | Example 1 | | Comparative | |
|---|---|---|---|---|
| | (T) | (W) | (T) | (W) |
| Consistency*: | | | | |
| 10°C | 7.0 | 7.5 | 6.5 | 6.5 |
| 20°C | 7.0 | 7.5 | 7.0 | 6.5 |
| 25°C | 6.5 | 6.5 | 5.0 | 6.0 |

| Oil exudation^: | | | | |
|---|---|---|---|---|
| | 237 | 139 | 246 | 200 |

| | | | | |
|---|---|---|---|---|
| *measured after repeated temperature cycling from 10°C to 25°C over a period of seven days on a scale of 1-10. | | | | |
| ^measured in mg oil/cm.cm. Lower scores are better. | | | | |

It can be seen that the products of the present invention exhibit improved second-place keepability, especially when the consistency at higher temperatures is considered.

### Example 2: Homogeniser Temperature:

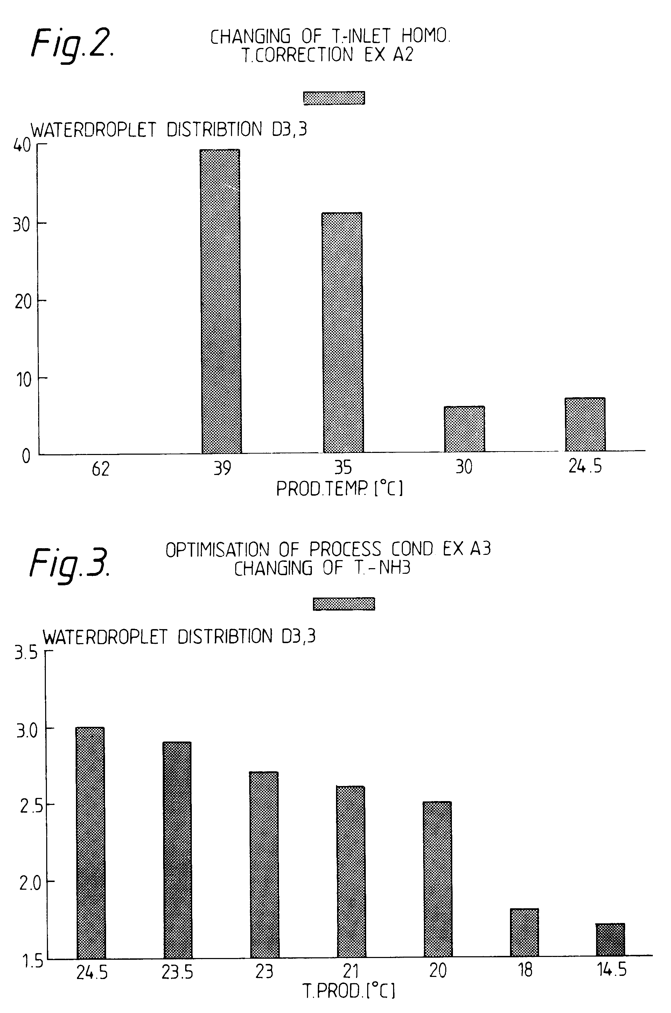

As mentioned in the preamble, the homogenisation temperature had an effect on product properties. Figure 2 shows the effect of temperature variations on water-drop distribution, with examples of the invention given for temperatures below 35°C and comparative examples at temperatures above 35°C. At homogeniser (5) temperatures below 35°C the water droplet size and distribution are acceptable, above this temperature, coarse emulsions were obtained with unacceptable properties.

### Example 3: The Second A-unit Exit Temperature:

As also mentioned in the preamble, the exit temperature of the A-unit (9) is to some degree important. Figure 3 shows the effect of variations in the cooling temperature on the D3,3 of the eventual product. It can be seen from the graph that the D3,3 decreases with the outlet temperature of the A-unit (9).

### Example 4: Ascorbic Acid as Acidifying Agent:

Various modifications may be made within the scope of the present invention. One such modification is the use of ascorbic acid.

In the absence of protein, ascorbic acid can be used as a pH modifying agent. In the presence of protein the buffer capacity of the amino-acid residues is sufficient to prevent reasonable quantities of ascorbic acid having a significant effect on the pH.

### Example 5: Products Free From Added Emulsifiers:

Comparative experiments were performed between products made according to the method of claim 1 with and without emulsifiers, using the following formulations. An attempt was also made to manufacture a spread according to a method of the prior art both with and without an emulsifier. The following results were obtained:

| | Example 5. | Example 1. | Prior Art |
|---|---|---|---|
| Fat Blend | 60% | 59.55% | 59.55% |
| Lecithin | 0 | 0.2% | 0.2% |
| Hymono 7804® | 0 | 0.1% | 0.1% |
| Hymono 8803® | 0 | 0.15% | 0.15% |
| Beta Carotene | 25ppm | 25ppm | 25ppm |
| Water | 39.85% | 39.85% | 39.85% |
| NaCl | 0.15% | 0.15% | 0.15% |
| Flavour | trace | trace | trace |
| Homog. | yes | yes | no |
| Taste | 6.9 | 6.6 | 6.6 |

| Consistency | | | |
|---|---|---|---|
| @ 10°C | 7.5 | 7.5 | 7.5 |
| @ 20°C | 6.0 | 7.0 | 6.5 |
| @ 25°C | 4.5 | 5.5 | 5.5 |
| Meltdown | 6.9 | 6.6 | 6.9 |
| D 3,3 | 1.3 | 1.0 | 2.5 |
| sigma | 2.3 | 2.5 | 1.9 |
| 2pc* | yes | yes | no |

| | | | |
|---|---|---|---|
| *2pc= second place keepability | | | |

With the method of the present invention and with the prior art method, emulsifier containing spreads could be made (compare the "Example 1" column and the "prior art" column). In this case as with example 1 the products of the present invention exhibited 'second place keepability' much improved over the prior art.

Despite the attempt being made, it proved impossible to make a product without emulsifiers by the method of the prior art. The emulsion which was produced had large unstable water drops and could not be considered suitable for use as a spread. However, with the method of the present invention a spread could be manufactured without the use of emulsifiers which had properties comparable to those of the prior art product, and in addition exhibited 'second place keepability'.

Microbiological assay after purposeful inoculation of the process stream with either penicillium spp. and paecilomyces revealed that the products of the present invention were much less able to support growth of these fat-splitting microbes, than products of the prior art.

### Example 6: Use of Emulsifier as an Anti-Spattering Agent:

A minor drawback of the products of example 5 which contained no emulsifiers was that they exhibited some spattering on use in frying, ejecting hot fat from the pan. On re-introduction of the lecithin (0.2-0.45wt% native bean-oil lecithin) into the product formulation it was determined that the spattering value could be greatly improved to a value comparable with commercial full fat (80%) spreads. In a representative experiment (example 6) the following composition was employed and the indicated results were obtained (for convenience the data of example 5 and the comparative example are repeated);

| | Example 5. | Example 6. | Prior Art |
|---|---|---|---|
| Fat Blend | 60% | 59.7% | 59.55% |
| Lecithin | 0 | 0.3% | 0.2% |
| Hymono 7804® | 0 | 0 | 0.1% |
| Hymono 8803® | 0 | 0 | 0.15% |
| Beta Carotene | 25ppm | 30ppm | 25ppm |
| Water | to 100% | to 100% | to 100% |
| NaCl | 0.15% | 0.15% | 0.15% |
| Flavour | trace | trace | trace |
| Homog. | yes | yes | no |
| Taste | 6.9 | 7.0 | 6.6 |

| Consistency | | | |
|---|---|---|---|
| @ 10°C | 7.5 | 6.0 | 7.5 |
| @ 20°C | 6.0 | 7.5 | 6.5 |
| @ 25°C | 4.5 | - | 5.5 |
| Meltdown | 6.9 | 7.0 | 6.9 |
| D 3,3 | 1.3 | 2.0 | 2.5 |
| sigma | 2.3 | 2.5 | 1.9 |
| 2pc* | yes | yes | no |

| | | | |
|---|---|---|---|
| *2pc= second place keepability | | | |

In addition the consistency, spattering behavior, temperature cycling stability and oil exudation value were determined for the product of Example 6.

Consistency at 10°C after one week of cycling from 10°C to 20°C and back, under two different cycling regimens; 'cycle (A)' and 'cycle (B)' was 7.0. Under identical conditions consistency at 20°C was 7.5.

Spattering behaviour was analyses bot in terms of primary spattering (which occurs when a sample of spread is placed in a pan) and secondary spattering (which occurs when water is introduced into hot fat). With the sample of Example 5, both primary and secondary spattering was very noticable, whereas with the sample of Eample 6, spattering was very much reduced and typical of 60% fat spreads.

The extent of oil exudation on storage was quite acceptable.

Representative Stevens (hardness) values were as follows:

| Temp. | Fresh | Cycle (A) | Cycle(B) |
|---|---|---|---|
| 5°C | 373 | - | - |
| 10°C | 161 | 113 | 127 |
| 20°C | 40 | 26 | 35 |
| 23°C | 26 | - | - |

These values are quite acceptable for an edible spread.

In this instance it is important to note that the lecithin is not required as an emulsifier, as the spreads are stable in the absence of an emulsifier. The lecithin in this instance finds a use as an anti-spattering agent in a spread which is otherwise stable.

The expression D3,3 is defined as "volume weighted geometric mean diameter" and the expression sigma as "standard value of the mean diameter". For exemplification may be referred at: Part.Part.Syst Charact 7 (1990) 233-241 and ibid 8 (1991) 237-241.

## Claims

1. An edible spread comprising a dispersion of 15-60%wt of a water phase in 40-85%wt of a continuous fat phase CHARACTERISED IN THAT the water phase contains less than 0.05% protein and has a D3,3 (volume weighted geometric mean diameter) ≦ 2µm and a sigma value (standard deviation of the mean value) ≦ 2.5 for the water drop size.

2. A spread according to claim 1 wherein the water-phase further comprises a non-proteinaceous emulsifier system.

3. A spread according to claim 2 wherein the emulsifier is selected from the group comprising lecithins, partial glycerides and mixtures of lecithins and partial glycerides.

4. A spread according to claim 3 wherein the emulsifier comprises a mixture of lecithins and monoglycerides.

5. A spread according to claim 4 wherein the emulsifier is present at a concentration of 0.1-0.5% on product.

6. Edible spread according to claim 1 comprising 0.1-1% lecithin and less than 0.01-1% sodium chloride.

7. Edible spread according to claim 6 essentially free of monoglyceride.

8. Edible spread according to claim 6 comprising 50-70% fat phase.

9. Edible spread according to any claim 1-8 essentially free of sorbate.

10. Edible spread according to any claim 1-9 wherein the solid at index fat the indicated temperature is N10 25-40, N15 22-30, N20 14-21, N25 8-12, N30 <6 and N35 <2.

11. Edible spread according to any claim 1-10 comprising a dispersion CHARACTERISED IN THAT the spread is stable in the absence of emulsifier.

12. Edible spread according to any claim 1-11 further comprising lecithin as an anti-spattering agent.

13. Edible spread according to any claim 1-12, wherein the salt content is below 0.2%.

14. Edible spread according to any claim 1-13 which contains 0.0001 - 0.1% ascorbic acid and which is substantially free of protein.

## Patentansprüche

1. Eßbarer Aufstrich, umfassend eine Dispersion von 15 bis 60 Gew.-% einer Wasserphase in 40 bis 85 Gew.-% einer kontinuierlichen Fettphase, dadurch gekennzeichnet, daß die Wasserphase weniger als 0,05 % Protein enthält und einen D3,3-Wert (volumengewichteter geometrischer mittlerer Durchmesser) von ≦ 2 µm und einen sigma-Wert (Standardabweichung des mittleren Wertes) von ≦ 2,5 für die Wassertröpfchengröße hat.

2. Aufstrich nach Anspruch 1, in dem die Wasserphase ferner ein nicht-proteinhaltiges Emulgatorsystem umfaßt.

3. Aufstrich nach Anspruch 2, in dem der Emulgator aus der Lezithine, partielle Glyceride und Mischungen von Lezithinen und partiellen Glyceriden umfassenden Gruppe ausgewählt ist.

4. Aufstrich nach Anspruch 3, in dem der Emulgator eine Mischung von Lezithinen und Monoglyceriden umfaßt.

5. Aufstrich nach Anspruch 4, in dem der Emulgator in einer Konzentration von 0,1 bis 0,5 %, bezogen auf das Produkt, vorliegt.

6. Eßbarer Aufstrich nach Anspruch 1, umfassend 0,1 bis 1 % Lezithin und weniger als 0,01 bis 1 % Natriumchlorid.

7. Eßbarer Aufstrich nach Anspruch 6, der von Monoglycerid im wesentlichen frei ist.

8. Eßbarer Aufstrich nach Anspruch 6, der 50 bis 70 % Fettphase umfaßt.

9. Eßbarer Aufstrich nach irgendeinem der Ansprüche 1 bis 8, der von Sorbat im wesentlichen frei ist.

10. Eßbarer Aufstrich nach irgendeinem der Ansprüche 1 bis 9, bei dem Festfettgehalt beim angegebenen Fettgehalt und der angegebenen Temperatur N₁₀ = 25-40, N₁₅ = 22-30, N₂₀ = 14-21, N₂₅ = 8-12, N₃₀ < 6 und N₃₅ < 2 ist.

11. Eßbarer Aufstrich nach irgendeinem der Ansprüche 1 bis 10, umfassend eine Dispersion, dadurch gekennzeichnet, daß der Aufstrich in Abwesenheit eines Emulgators stabil ist.

12. Eßbarer Aufstrich nach irgendeinem der Ansprüche 1 bis 11, der ferner Lezithin als Antispritzmittel umfaßt.

13. Eßbarer Aufstrich nach irgendeinem der Ansprüche 1 bis 12, in dem der Salzgehalt unter 0,2 % liegt.

14. Eßbarer Aufstrich nach irgendeinem der Ansprüche 1 bis 13, der 0,0001 bis 0,1 % Ascorbinsäure enthält und von Protein im wesentlichen frei ist.

## Revendications

1. Une matière à tartiner comprenant une dispersion de 15 à 60 % en masse d'une phase aqueuse dans 40 à 85 % en masse d'une phase grasse continue CARACTERISEE EN CE QUE la phase aqueuse contiens moins de 0,05 % de protéine et présente un D3,3 (diamètre moyen du volume géométrique pondéré) ≦ 2 µm et une valeur sigma (déviation standard de la valeur moyenne) ≦ 2,5 pour la taille des gouttes d'eau.

2. Une matière à tartiner selon la Revendication 1, dans laquelle la phase aqueuse contient en outre a système d'émulsifiant non protéinique.

3. Une matière à tartiner selon la Revendication 2, dans laquelle l'émulsifiant est sélectionné parmi le groupe composé de lécithines, glycérides partielles et de mélanges de lécithines et de glycérides partielles.

4. Une matière à tartiner selon la Revendication 3, dans laquelle l'émulsifiant comprend un mélange de lécithines et de monoglycérides.

5. Une matière à tartiner selon la Revendication 4, dans laquelle l'émulsifiant est présent à un niveau de concentration allant de 0,1 à 0,5 % sur la base du produit.

6. Une matière à tartiner comestible selon la Revendication 1, comprenant 0,1 à 1 % de lécithine et moins de 0,01 à 1 % de chlorure de sodium.

7. Une matière à tartiner comestible selon la Revendication 6, essentiellement exempte de monoglycéride.

8. Matière à tartiner comestible selon la revendication 6, comprenant 50 à 70 % de phase grasse.

9. Matière à tartiner selon l'une quelconque des Revendications 1 à 8, essentiellement exempte de sorbate.

10. Matière à tartiner comestible selon l'une quelconque des Revendications 1 à 9, dans laquelle l'index de matière grasse solide à la température indiquée est de N10 = 25 à 40, N15 = 22 à 30, N20 = 14 à 21, N25 = 8 à 12 et N30 < 6, et N35 < 2.

11. Matière à tartiner comestible selon l'une quelconque des Revendications 1 à 10, comprenant une dispersion CARACTERISEE EN CE QUE la matière à tartiner est stable en l'absence d'émulsifiant.

12. Matière à tartiner comestible selon l'une quelconque des Revendications 1 à 11, comprenant en outre de la lécithine en tant qu'agent anti-éclaboussant.

13. Matière à tartiner comestible selon l'une quelconque des Revendications 1 à 12, dans laquelle la teneur en sel est inférieure à 0,2 %.

14. Matière à tartiner comestible selon l'une quelconque des Revendications 1 à 13, qui contient entre 0,0001 et 0,1% d'acide ascorbique et qui est substantiellement exempte de protéine.
